# EUROPEAN PATENT APPLICATION

(11) **EP 4 761 083 A1**
(43) Date of publication of application: **17.06.2026**
(21) Application number: 25185433.7
(22) Date of filing: 26.06.2025
(51) Int. Cl.: H02M 1/00, H02M 1/36, H02M 3/158, H02M 1/32

(54) **PMIC AND OPERATION METHOD THEREOF, AND POWER SUPPLY CIRCUIT INCLUDING THE PMIC**

(30) Priority: 10.12.2024 KR 20240182649
(71) Applicant: Samsung Electronics Co., Ltd., Suwon-si, Gyeonggi-do 16677 (KR)
(72) Inventor: PARK, Dasol, 16677 Suwon-si, Gyeonggi-do (KR); CHUN, Ho-Jin, 16677 Suwon-si, Gyeonggi-do (KR); JEONG, Jong-Wook, 16677 Suwon-si, Gyeonggi-do (KR)
(74) Representative: Kuhnen & Wacker Patent- und Rechtsanwaltsbüro PartG mbB

(57) **Abstract**

According to an embodiment of the present disclosure, a power supply circuit (PSC) may be provided. The power supply circuit (PSC) may include first to n-th inductors connected to an output node (Nout), first to n-th switching circuits (121-12n) configured to provide first to n-th switching signals (SW1-SWn) to the first to n-th inductors (L1-L1n), respectively, and a power management circuit (110) configured to determine an operation order of the first to n-th switching circuits (121-12n) based on first to n-th inductor currents (IL1-ILn) corresponding to the first to n-th inductors (L1-L1n), respectively.

## Description

### BACKGROUND

### (a) Field

The present disclosure relates to an electric circuit providing power to a load. More specifically, the present disclosure relates to a power management integrated circuit (PMIC) and a power supply circuit including the same.

### (b) Description of the Related Art

Typically, power supply circuits provide power to the load based on a buck converter structure. Recently, considering flexibility of circuit design, such a buck converter is implemented in a multi-channel (or multi-phase) structure.

The efficiency of which a power supply circuit provides power to the load may be determined based on the inductance of an inductor included in each channel. Accordingly, if the power supply circuit drives a plurality of channels without considering the inductance of the inductor included in each channel, the efficiency of the power provided to the load may be deteriorated.

### SUMMARY

The present disclosure is intended to solve the technical problems described above. More specifically, an object of the present disclosure is to provide a PMIC and an operation method thereof for improving the efficiency of power provision to the load, and a power supply circuit including the PMIC.

According to an embodiment of the present disclosure, a power supply circuit may be provided. The power supply circuit may include: first to n-th inductors connected to an output node; first to n-th switching circuits configured to provide first to n-th switching signals to the first to n-th inductors, respectively; and a power management circuit configured to determine an operation order of the first to n-th switching circuits, based on first to n-th inductor currents corresponding to the first to n-th inductors, respectively.

According to an embodiment of the present disclosure, an operation method of a power management integrated circuit (PMIC) providing power to a load through a plurality of channels may be provided. The operation method may include: booting-up; pre-charging the plurality of channels; determining an operation order of the plurality of channels; and supplying power to the load based on the operation order.

According to an embodiment of the present disclosure, a power management integrated circuit (PMIC) may be provided. The PMIC may include: first to n-th switching pads connected to first to n-th channels, respectively; first to n-th switching circuits configured to respectively measure first to n-th swing currents corresponding to the first to n-th channels, respectively; and a power management circuit configured to determine an operation order of the first to n-th channels based on the first to n-th swing currents.

### BRIEF DESCRIPTION OF THE DRAWINGS

FIG. 1 is a diagram showing a power supply system according to an embodiment of the present disclosure.
FIG. 2 is a diagram showing the relationship between the current flowing through the load of FIG. 1 and the operating efficiency of the power supply circuit.
FIG. 3 is a graph showing the operation of the PMIC based on the current ranges of FIG. 2.
FIG. 4 is a diagram showing the inductance distribution of the inductors of FIG. 1.
FIG. 5 is a drawing showing the configuration of the switching circuit of FIG. 1 in more detail.
FIG. 6 is a graph showing the inductor currents of FIG. 1.
FIG. 7 is a diagram showing a channel priority table generated according to the embodiment of FIG. 6.
FIG. 8 is a timing diagram showing the operation of a power supply circuit according to an embodiment of the present disclosure.
FIG. 9 is a flowchart showing an operation method of a PMIC according to an embodiment of the present disclosure.
FIG. 10 is a flowchart showing operation S130 of FIG. 9 in more detail. Referring to FIGS. 1 to 10, operation S130 may include operations S131 to S134 below.
FIG. 11 is a graph showing wear of the inductor of FIG. 1 when the embodiment of the present disclosure is not applied.
FIG. 12 is a block diagram showing the operation of the power management circuit of FIG. 1 according to an embodiment.
FIG. 13 is a diagram showing the operation of the power supply circuit PSC according to an embodiment.

### DETAILED DESCRIPTION OF THE EMBODIMENTS

Hereinafter, various embodiments will be described in detail and clearly to such an extent that an ordinary one in the art easily implements the present disclosure. Specific details such as detailed components and structures are merely provided to assist the overall understanding of the various embodiments. Moreover, descriptions of well-known functions and structures are omitted for clarity and brevity. In the following drawings or in the detailed description, configurations may be connected with any other components except for components illustrated in a drawing or described in the detailed description.

The terms described below are terms defined in consideration of the functions of the present disclosure and are not limited to a specific function. The definitions of the terms should be determined based on the contents throughout the specification. Components that are described in the detailed description with reference to the terms "driver", "block", etc. will be implemented with software, hardware, or a combination thereof. For example, the software may be a machine code, firmware, an embedded code, and application software. For example, the hardware may include an electrical circuit, an electronic circuit, a processor, a computer, integrated circuit cores, a pressure sensor, a microelectromechanical system (MEMS), a passive element, or a combination thereof.

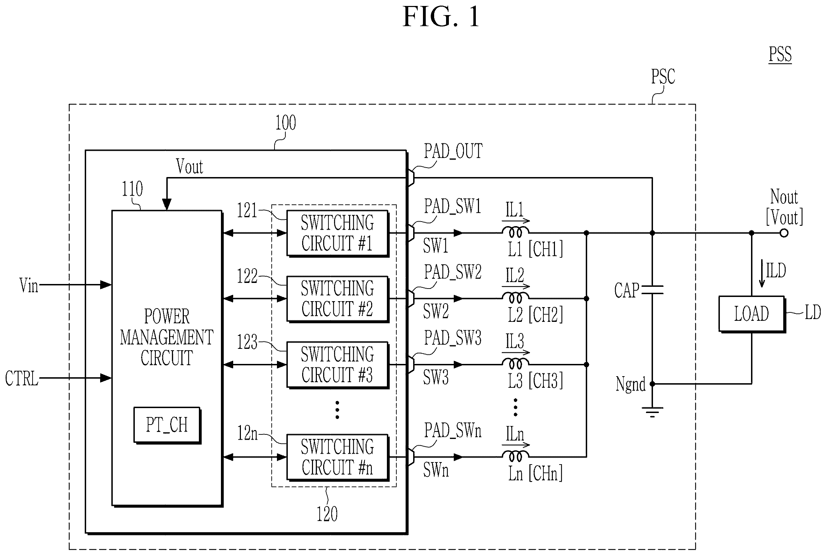

FIG. 1 is a diagram showing a power supply system according to an embodiment of the present disclosure. Referring to FIG. 1, a power supply system PSS may include a power supply circuit PSC and a load LD.

The power supply circuit PSC may provide power to the load LD through an output node Nout. For example, the power supply circuit PSC may provide an output voltage Vout to the load LD through the output node Nout.

In an embodiment, the load LD may be included in one of various types of electronic devices, such as a memory device, a storage device, a processing device, a sensor device, a motor device, and the like.

The power supply circuit PSC may be implemented as a multi-channel (or multi-phase) buck converter structure. For example, the power supply circuit PSC may include a power management integrated circuit (PMIC) 100, first to n-th inductors L1 to Ln, and a capacitor CAP.

In an embodiment, components included in the power supply circuit PSC that are not included in the PMIC 100 may be referred to as 'PMIC external circuit'. For example, the first to n-th inductors L1 to Ln and the capacitor CAP may be referred to as 'PMIC external circuits'. However, the scope of the present disclosure is not limited thereto.

PMIC 100 may include a power management circuit 110 and a switching circuit array 120. The switching circuit array 120 may include first to n-th switching circuits 121 to 12n.

The power management circuit 110 may receive an input voltage Vin and a control signal CTRL from outside (e.g., external device). The power management circuit 110 may control overall operation of the PMIC 100 based on the input voltage Vin and the control signal CTRL. For example, the power management circuit 110 may control the first to n-th switching circuits 121 to 12n to provide the output voltage Vout to the output node Nout by down-converting (e.g., buck-converting or step-down-converting) the input voltage Vin.

The first to n-th switching circuits 121 to 12n may be connected to the first to n-th switching pads PAD_SW1 to PAD_SWn, respectively.

Each of the first to n-th switching circuits 121 to 12n may output a switching signal SW through a corresponding switching pad PAD_SW. For example, the first to n-th switching circuits 121 to 12n may output the first to n-th switching signals SW1 to SWn, respectively, in response to the control of the power management circuit 110.

The first to n-th inductors L1 to Ln may be connected between the first to n-th switching pads PAD_SW1 to PAD_SWn and the output node Nout, respectively. For example, a first inductor L1 may be connected between a first switching pad PAD_SW1 and the output node Nout; and a second inductor L2 may be connected between a second switching pad PAD_SW2 and the output node Nout.

In an embodiment, the nominal inductance of each of the first to n-th inductors L1 to Ln may be equal to each other. In this case, the configuration of the PMIC external circuit may be changed more flexibly according to the characteristics of the load LD (e.g., size, rate of change, etc.).

The capacitor CAP and the load LD may be connected between the output node Nout and the ground node Ngnd.

The voltage level of the output node Nout (i.e., the output voltage Vout) may be fed back to the PMIC 100 through the output pad PAD_OUT. The power management circuit 110 may control the operation of the switching circuit array 120 based on the fedback output voltage Vout. In this way, the power supply circuit PSC may maintain the voltage level of the output voltage Vout constantly.

The paths between the first to n-th switching pads PAD_SW1 to PAD_SWn and the output nodes Nout may be referred to as first to n-th channels CH1 to CHn, respectively. For example, a path connected from a first switching pad PAD_SW1 to the output node Nout through a first inductor L1 may be referred to as the first channel CH1; and a path connected from a second switching pad PAD_SW2 to the output node Nout through a second inductor L2 may be referred to as the second channel CH2. That is, the power supply circuit PSC may have a multi-channel buck converter structure including first to n-th channels CH1 to CHn.

The first to n-th switching circuits 121 to 12n may control the first to n-th channels CH1 to CHn, respectively. For example, each of the first to n-th switching circuits 121 to 12n may control a size of a current provided to the corresponding channel CH by controlling the toggle timing of the switching signal SW (e.g., time points where the voltage level of the switching signal rises or falls). That is, the first to n-th switching circuits 121 to 12n may control the first to n-th inductor currents IL1 to ILn flowing into the first to n-th inductors L1 to Ln, respectively.

The power management circuit 110 may control some or all of the first to n-th channels CH1 to CHn according to the size of the current required from the load LD (i.e., a load current ILD). That is, the power management circuit 110 may also activate (e.g., drive) only some of the first to n-th channels CH1 to CHn according to the size of the load current ILD. In other words, the power management circuit 110 may activate (e.g., drive) only some of the first to n-th switching circuits 121 to 12n according to the size of the load current ILD.

The power management circuit 110 may store a channel priority table PT_CH. When activation of some of the first to n-th channels CH1 to CHn is required, the power management circuit 110 may determine which of the first to n-th channels CH1 to CHn to activate with priority, based on the channel priority table PT_CH. In other words, the power management circuit 110 may determine the operation order of the first to n-th channels CH1 to CHn (e.g., the first to n-th switching circuits 121 to 12n) based on the channel priority table PT_CH.

In an embodiment, the power management circuit 110 may generate the channel priority table PT_CH based on the inductances of the first to n-th inductors L1 to Ln. That is, the channel priority table PT_CH may be determined by considering the inductances of the first to n-th inductors L1 to Ln. In this case, the channel priority table PT_CH may reflect the error between the actual inductance and the nominal inductance of each of the first to n-th inductors L1 to Ln. That is, according to an embodiment of the present disclosure, the operation order of the first to n-th channels CH1 to CHn (e.g., the first to n-th switching circuits 121 to 12n) may be determined by considering the inductance of each of the first to n-th inductors L1 to Ln, so that the operation efficiency (e.g., power conversion efficiency) of the power supply circuit PSC may be improved.

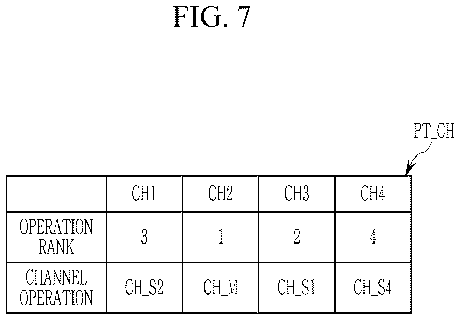

In an embodiment, the channel priority table PT_CH may include an operation rank for each of the first to n-th channels CH1 to CHn (or the first to n-th switching circuits 121 to 12n). A more detailed configuration of the channel priority table PT_CH is described with reference to FIG. 7 below.

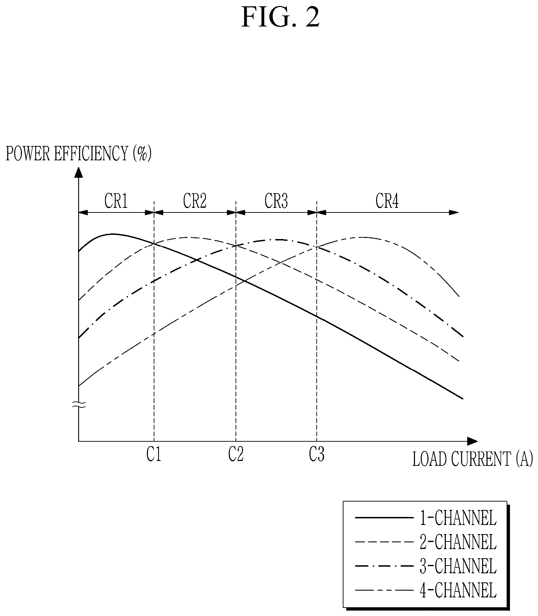

FIG. 2 is a diagram showing the relationship between the current flowing through the load of FIG. 1 and the operating efficiency of the power supply circuit. Referring to FIGS. 1 and 2, the horizontal axis may represent the load current ILD, and the vertical axis may represent the power efficiency of the power supply circuit PSC (e.g., the ratio of the power provided to the load LD to the power provided to the power supply circuit PSC through the input voltage Vin).

The size of the load LD (e.g., equivalent resistance) may continuously vary. For example, the size of the load LD may continuously change depending on the operating state of the electronic device including the load LD. In this case, the size of the current required from the load LD (i.e., the required load current ILD) may continuously change.

The power efficiency of the power supply circuit PSC may vary depending on the size of the load current ILD and the number of channels operating within the power supply circuit PSC. Hereinafter, for a more concise explanation, a representative embodiment in which a total of four channels CH are implemented in the power supply circuit PSC will be described below. That is, hereinafter, an example in which 'n' is 4 will be described as a representative example. However, the scope of the present disclosure is not limited thereto, and any number of channels (e.g., two, three, etc.) may be implemented in the power supply circuit PSC.

The graph drawn with a solid line may represent the power efficiency when only one channel operates within the power supply circuit PSC; the graph drawn with a dotted line may represent the power efficiency when two channels operate within the power supply circuit PSC; the graph drawn with a single dotted line may represent the power efficiency when three channels operate within the power supply circuit PSC; and the graph drawn with a double dotted line may represent the power efficiency when four channels operate within the power supply circuit PSC.

Referring to these graphs, it may be shown that the larger the load current ILD, the better the power efficiency of the power supply circuit PSC with a large number of channels in operation. For example, when the load current ILD is included in a first current range CR1 between '0' (e.g., a no-load state) and a first current value C1, a power efficiency of the power supply circuit PSC may be highest when it drives only one channel CH; when the load current ILD is included in a second current range CR2 between the first current value C1 and a second current value C2, a power efficiency of the power supply circuit PSC may be highest when it drives two channels CH; when the load current ILD is included in a third current range CR3 between the second current value C2 and a third current value C3, power efficiency of the power supply circuit PSC may be highest when it drives three channels CH; When the load current ILD is within the fourth current range CR4 greater than the third current value C3, power efficiency of the power supply circuit PSC may be highest when it drives four channels CH.

In an embodiment, the first current value C1 may represent a current value at which power efficiency becomes the same when the power supply circuit PSC drives one channel and when the power supply circuit PSC drives two channels CH; the second current value C2 may represent a current value at which power efficiency becomes the same when the power supply circuit PSC drives two channels and when the power supply circuit PSC drives three channels CH; and the third current value C3 may represent a current value at which power efficiency becomes the same when the power supply circuit PSC drives three channels and when the power supply circuit PSC drives four channels CH. However, the scope of the present disclosure is not limited thereto.

The PMIC 100 may determine the number of switching circuits to operate based on each current range CR, by considering such the relationship between the load current ILD and the power efficiency of the channel operating within the power supply circuit PSC. That is, the PMIC 100 may drive as many channels as necessary to maximize power efficiency for each current range CR. For example, when the load current ILD is included in the first current range CR1, the PMIC 100 may activate (e.g., drive) only one switching circuit; when the load current ILD is included in the second current range CR2, the PMIC 100 may activate two switching circuits; when the load current ILD is included in the third current range CR3, the PMIC 100 may activate three switching circuits; and when the load current ILD is included in the fourth current range CR4, the PMIC 100 may activate four switching circuits.

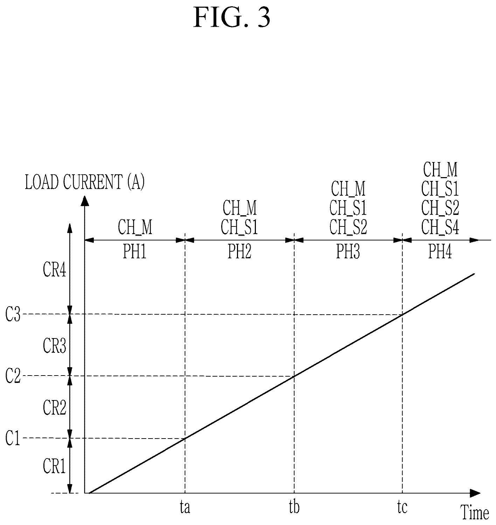

FIG. 3 is a graph showing the operation of the PMIC based on the current ranges of FIG. 2. The horizontal axis of FIG. 3 may represent time, and the vertical axis may represent the load current ILD. For a more concise explanation, FIG. 3 illustrates that the load current ILD (i.e., the current required by the load LD) increases linearly as time flows, but the scope of the present disclosure is not limited thereto. For example, the load current ILD may vary nonlinearly depending on the operation of the electronic device corresponding to the load LD.

Referring to FIGS. 1 to 3, the PMIC 100 may operate with first to fourth phases PH1 to PH4 for cases where the load current ILD is in the first to fourth current ranges CR1 to CR4, respectively. For example, the PMIC 100 may operate in a first phase PH1 until a first time point ta at which the load current ILD reaches the first current value C1; may operate in a second phase PH2 from the first time point ta to a second time point tb at which the load current ILD reaches a second current value C2; may operate in a second phase PH2 from the second time point tb to a third time point tc at which the load current ILD reaches a third current value C3; and may operate in a fourth phase PH4 after the third time point tc where the load current ILD exceeds the third current value C3.

PMIC 100 may sequentially accumulate and drive a plurality of channels CH across the first to fourth phases PH1 to PH4.

More specifically, the PMIC 100 may activate one channel in the first phase PH1. The channel driven in the first phase PH1 may be referred to as the master channel CH_M. In other words, the PMIC 100 may drive only the master channel CH_M in the first phase PH1.

In the second phase PH2, the PMIC 100 may activate one more channel CH in addition to the master channel CH_M. For example, the PMIC 100 may drive the master channel CH_M and the first slave channel CH_S1 in the second phase PH2.

In a similar way, the PMIC 100 may drive the master channel CH_M, the first slave channel CH_S1, and the second slave channel CH_S2 in the third phase PH3. PMIC 100 may drive a master channel CH_M, a first slave channel CH_S1, a second slave channel CH_S2, and a third slave channel CH_S3 in the fourth phase PH4.

The power management circuit 110 may determine a master channel CH_M, a first slave channel CH_S1, a second slave channel CH_S2, and a third slave channel CH_S3 based on the channel priority table PT_CH. For example, the power management circuit 110 may determine each of the first to fourth channels CH1 to CH4 to be a different one among the master channel CH_M, the first slave channel CH_S1, the second slave channel CH_S2, and the third slave channel CH_S3 based on the channel priority table PT_CH.

According to an embodiment of the present disclosure, the master channel CH_M may continuously provide current to the load LD, and whether each of the first to third slave channels CH_S1 to CH_S3 provide current to the load LD may be determined depending on the size of the load LD. In this case, whether the master channel CH_M of the PMIC 100 is properly selected may be a dominant factor for determining the average power conversion efficiency of the power supply circuit PSC compared to whether the first to third slave channels CH_S1 to CH_S3 are properly selected. In this way, from the perspective of average power conversion efficiency of the power supply circuit PSC, the selection of the first slave channel CH_S1 may be a more important factor than the selection of the second slave channel CH_S2, and the selection of the second slave channel CH_S2 may be a more important factor than the selection of the third slave channel CH_S3.

The power transfer efficiency of each channel CH may be determined based on the inductance of the inductor L included in each channel CH. Therefore, if the channel priority table PT_CH is determined by considering the inductance of the inductor L of each channel CH, the power conversion efficiency of the power supply circuit PSC may be maximized.

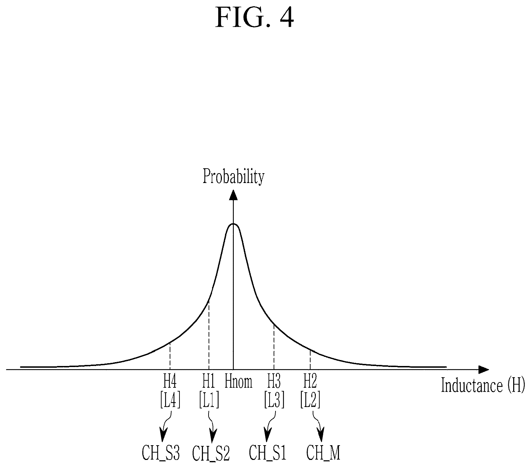

FIG. 4 is a diagram showing the inductance distribution of the inductors of FIG. 1. The horizontal axis of FIG. 4 may represent inductance, and the vertical axis of FIG. 4 may represent probability.

Referring to FIGS. 1 to 4, the nominal inductance of each of the first to fourth inductors L1 to L4 may be the same. For example, all of the inductances of the first to fourth inductors L1 to L4 may be intended as "Hnom".

However, the actual inductance of the first to fourth inductor L1 to L4 may be different from "Hnom". For example, the actual inductance of the first to fourth inductors L1 to L4 may differ from "Hnom" due to various reasons such as process deviation, wear, etc. For a more detailed example, the actual inductances of the first to fourth inductors L1 to L4 may be "H1" to "H4", respectively. In this case, due to the difference between "H1" and "H4", depending on which channel CH is determined as the master channel CH_M (in other words, depending on which channel CH is determined as the slave channel CH_S), the power conversion efficiency of the power supply circuit PSC may vary.

The power conversion efficiency of the power supply circuit PSC may be determined by 'alternating current power loss (AC power loss)' occurring in each channel CH. More specifically, the smaller the AC power loss occurring in each channel CH, the higher the power conversion efficiency of the power supply circuit PSC.

The AC power loss occurring in each channel CH may have a negative correlation with the inductance of each channel CH. For example, if the inductance of a specific channel CH is large, the AC power loss occurring in the channel CH may be reduced. On the other hand, if the inductance of a specific channel CH is small, the AC power loss occurring in the channel CH may increase.

Therefore, by determining a channel CH which includes an inductor with high inductance as a channel which has a dominant influence on the power conversion efficiency of the power supply circuit PSC (e.g., the master channel CH_M), the power conversion efficiency of the power supply circuit PSC may be maximized. In other words, if the PMIC 100 assigns a channel with high inductance to a high operating priority, the power conversion efficiency of the power supply circuit PSC may be maximized. Conversely, if the PMIC 100 assigns low inductance channels to low operating priorities, the power conversion efficiency of the power supply circuit PSC may be maximized. For example, referring to "L1" to "L4" of FIG. 4, when the channel priority table PT_CH indicates the operation order in the order of 'second channel CH2 - third channel CH3 - first channel CH1 - fourth channel CH4', the power conversion efficiency of the power supply circuit PSC may be maximized.

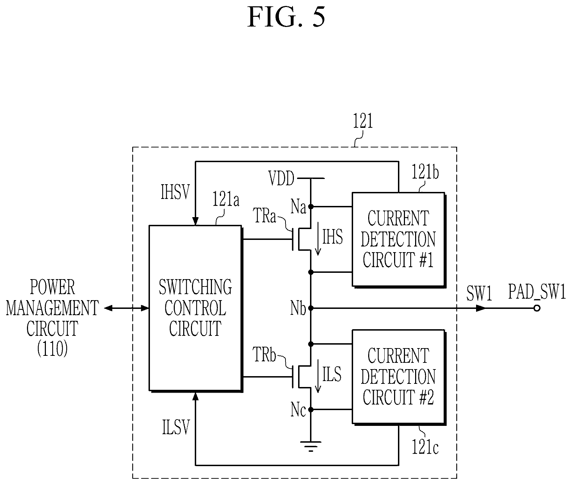

FIG. 5 is a drawing showing the configuration of the switching circuit of FIG. 1 in more detail. Hereinafter, the configuration of the first switching circuit 121 will be representatively described with reference to FIGS. 1 to 5. However, the scope of the present disclosure is not limited thereto, and the second to n-th switching circuits 122 to 12n may also be implemented in a similar manner.

The first switching circuit 121 may include a switching control circuit 121a, a first current detection circuit 121b, a second current detection circuit 121c, and first and second transistors TRa and TRb.

The first transistor TRa may be connected between a first node Na and a second node Nb. The second transistor TRb may be connected between the second node Nb and a third node Nc. The first node Na may be connected to the power supply voltage VDD, the second node Nb may be connected to the first switching pad PAD_SW1, and the third node Nc may be connected to the ground voltage.

The switching control circuit 121a may control the first transistor TRa and the second transistor TRb based on the control of the power management circuit 110. For example, the switching control circuit 121a may control the voltage level of the gate terminal of each of the first transistor TRa and the second transistor TRb based on the control of the power management circuit 110.

The switching control circuit 121a may control the first transistor TRa and the second transistor TRb mutually exclusively. For example, the switching control circuit 121a may provide a logic high voltage (e.g., a power supply voltage VDD) to the gate terminal of the first transistor TRa while providing a logic low voltage (e.g., a ground voltage)) to the gate terminal of the second transistor TRb. Conversely, the switching control circuit 121a may provide a logic high voltage to the gate terminal of the second transistor TRb while providing a logic low voltage to the gate terminal of the first transistor TRa.

The switching control circuit 121a may alternately provide a logic high voltage to the gate terminals of each of the first transistor TRa and the second transistor TRb. In this case, the first switching signal SW1 (e.g., the voltage level of the second node Nb) may be output in a form of a pulse width modulation (PWM) voltage signal or a pulse frequency modulation (PFM) voltage signal through the first switching pad PAD_SW1.

In an embodiment, whether the first switching signal SW1 is a PWM voltage signal or a PFM voltage signal may be determined based on the timing at which the switching control circuit 121a controls the first transistor TRa and the second transistor TRb according to a request of the power management circuit 110.

The first current detection circuit 121b may detect the value of the high-side current IHS flowing through the first transistor TRa. For example, the first current detection circuit 121b may calculate the value of the current flowing from the first node Na to the second node Nb based on the voltage level difference between the first node Na and the second node Nb. For a more detailed example, the first current detection circuit 121b may detect the value of the high-side current IHS by dividing the value obtained by subtracting the voltage level of the second node Nb from the voltage level of the first node Na, by the resistance of drain-source on (RDSO)(or, on-state resistance) of the first transistor TRa. Hereinafter, the value of high-side current IHS may be referred to as high-side current value IHSV.

The second current detection circuit 121c may detect the value of the low-side current ILS flowing through the second transistor TRb. For example, the second current detection circuit 121c may calculate the value of the current flowing from the second node Nb to the third node Nc based on the voltage level difference between the second node Nb and the third node Nc. For a more detailed example, the second current detection circuit 121c may detect the value of the low-side current ILS by dividing the value obtained by subtracting the voltage level of the third node Nc from the voltage level of the second node Nb, by the RDSO (or, on-state resistance) of the second transistor TRb. Hereinafter, the value of the low-side current ILS may be referred to as the low-side current value ILSV.

The first current detection circuit 121b may provide a high-side current value IHSV to the switching control circuit 121a. The second current detection circuit 121c may provide a low-side current value ILSV to the switching control circuit 121a. The switching control circuit 121a may measure the current provided to the first switching pad PAD_SW1 (i.e., the first inductor current IL1 or the current of the first channel CH1) by subtracting the low-side current value ILSV from the high-side current value IHSV.

In an embodiment, when the high-side current value IHSV is greater than a predetermined first threshold value, the switching control circuit 121a may transition the logic level of the signal provided to the gate terminal of the first transistor TRa to logic low and may transition the logic level of the signal provided to the gate terminal of the second transistor TRb to logic high. On the other hand, when the low-side current value ILSV is greater than a predetermined second threshold value, the switching control circuit 121a may transition the logic level of the signal provided to the gate terminal of the first transistor TRa to logic high and transition the logic level of the signal provided to the gate terminal of the second transistor TRb to logic low. In this case, the phenomenon of the value of the first inductor current IL1 becoming excessively large or small may be prevented. That is, the switching control circuit 121a may limit the change in the value of the first inductor current IL1 based on the high-side current value IHSV and the low-side current value ILSV.

The switching control circuit 121a may notify, to the power management circuit 110, the value of the current provided to the first switching pad PAD_SW1 (i.e., the first inductor current IL1 or the current of the first channel CH1). In this way, the switching control circuits included in the first to n-th switching circuits 121 to 12n may respectively notify the first to n-th inductor currents IL1 to ILn to the power management circuit 110.

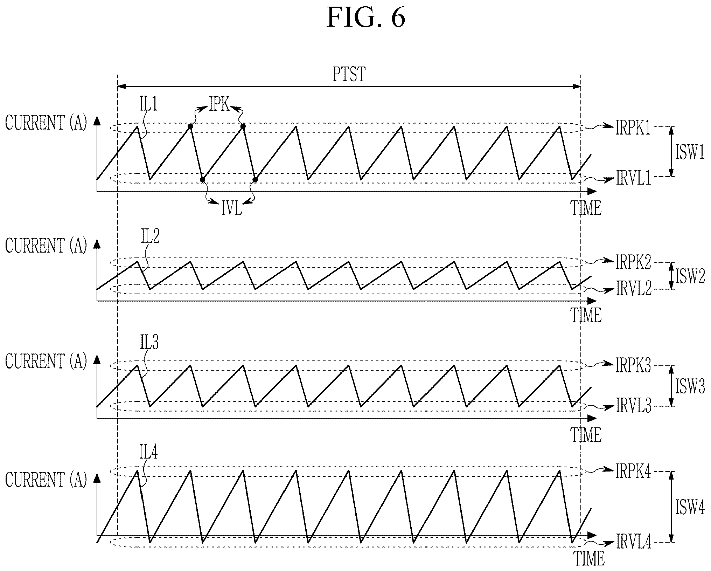

FIG. 6 is a graph showing the inductor currents of FIG. 1. The horizontal axis of each graph in FIG. 6 represents time, and the vertical axis of each graph in FIG. 6 represents current. For a more concise explanation, the first to fourth inductor currents IL1 to IL4 are representatively illustrated in FIG. 6. However, the scope of the present disclosure is not limited to the number of channels CH included in the power supply circuit PSC.

The first to fourth inductor currents IL1 to IL4 may be measured in a similar manner as described above with reference to FIG. 5. For example, the power management circuit 110 may recognize the values of the first to fourth inductor currents IL1 to IL4 based on the first to fourth switching circuits 121 to 124.

The power management circuit 110 may generate first to fourth switching signals SW1 to SW4 having a same frequency and a same duty ratio, by controlling the first to fourth switching circuits 121 to 124 during the test period PTST. In this case, the frequencies (or periods) of the first to fourth inductor currents IL1 to IL4 may be the same. Meanwhile, the level of the power supply voltage VDD and ground voltage included in each of the first to fourth switching circuits 121 to 124 may be the same. Therefore, the difference in the waveforms of the first to fourth inductor currents IL1 to IL4 will be caused by the difference in the inductances of the first to fourth inductors L1 to L4.

In an embodiment, the first to fourth switching signals SW1 to SW4 generated from the first to fourth switching circuits 121 to 124 in response to the control of the power management circuit 110 during the test period PTST may be PWM voltage signals having the same frequency and the same duty ratio.

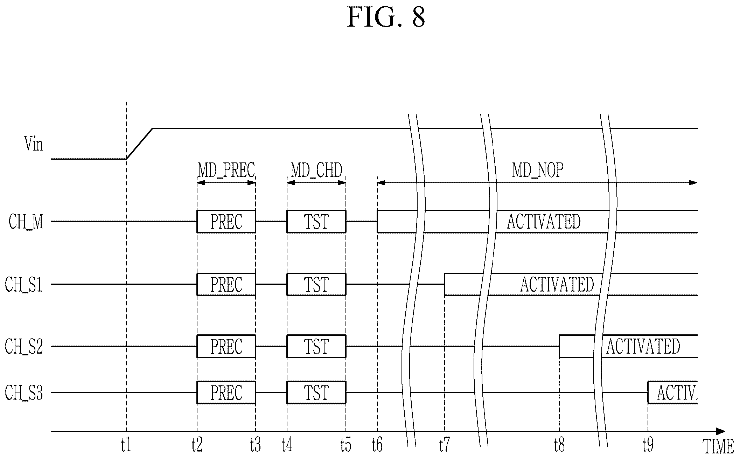

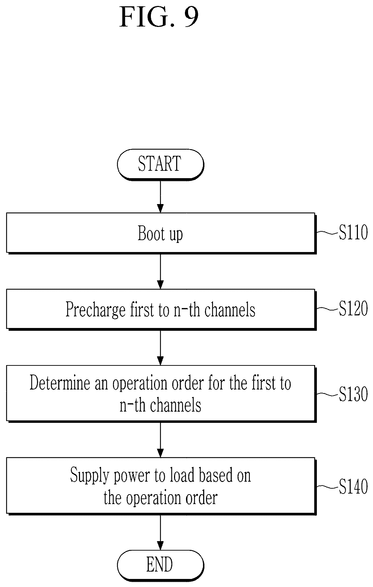

In an embodiment, the test period PTST may be assigned every time the power supply circuit PSC boots up. The test period PTST is described in more detail with reference to FIGS. 8 and 9 below.

The frequency of the first to fourth inductor currents IL1 to IL4 may be the same as the frequency of the first to fourth switching signals SW1 to SW4. Each of the first to fourth inductor currents IL1 to IL4 may repeat rising and falling with such a frequency. The maximally increased value of each of the first to fourth inductor currents IL1 to IL4 during one period may be referred to as peak current IPK, and the minimally decreased value of each of the first to fourth inductor currents IL1 to IL4 during one period may be referred to as valley current IVL.

The power management circuit 110 may measure a plurality of peak currents IPK and a plurality of valley currents IVL for each of the first to fourth inductor currents IL1 to IL4 during the test period PTST. For example, the power management circuit 110 may measure a plurality of peak currents IPK and a plurality of valley currents IVL for the first inductor current IL1 during the test period PTST; and may measure a plurality of peak currents IPK and a plurality of valley currents IVL for the second inductor current IL2.

The power management circuit 110 may calculate first to fourth representative peak currents IRPK1 to IRPK4 based on the peak currents IPK for the first to fourth inductor currents IL1 to IL4 during the test period PTST, respectively. For example, the power management circuit 110 may calculate an average value of a plurality of peak currents IPK for the first inductor current IL1 during the test period PTST as a first representative peak current IRPK1; and may calculate an average value of a plurality of peak currents IPK for the second inductor current IL2 as a second representative peak current IRPK2. However, the scope of the present disclosure is not limited to the specific algorithm that the power management circuit 110 uses to compute the representative peak current IRPK. For example, the power management circuit 110 may determine a median value, a maximum value, etc. of the plurality of peak currents IPK as the representative peak current IRPK.

In a similar manner, the power management circuit 110 may calculate first to fourth representative valley currents IRVL1 to IRVL4, respectively based on the valley currents IVL for the first to fourth inductor currents IL1 to IL4 during the test period PTST.

The power management circuit 110 may calculate the first to fourth swing currents ISW1 to ISW4 based on the first to fourth representative peak currents IRPK1 to IRPK4 and the first to fourth representative valley currents IRVL1 to IRVL4, respectively. For example, the power management circuit 110 may calculate the first swing current ISW1 by subtracting the first representative valley current IRVL1 from the first representative peak current IRPK1; and may calculate the second swing current ISW2 by subtracting the second representative valley current IRVL2 from the second representative peak current IRPK2.

The magnitudes of the first to fourth swing currents ISW1 to ISW4 may be different from each other. For example, the magnitudes of the first to fourth swing currents ISW1 to ISW4 may vary depending on the inductance of the inductor L included in the channel CH corresponding to each swing current ISW. More specifically, the magnitude of the swing current ISW corresponding to a channel including an inductor having a relatively large inductance may be smaller than the magnitude of the swing current ISW corresponding to a channel including an inductor having a relatively small inductance. For example, the size of the second swing current ISW2 may be smaller than the size of the third swing current ISW3, the size of the third swing current ISW3 may be smaller than the size of the first swing current ISW1, and the size of the first swing current ISW1 may be smaller than the size of the fourth swing current ISW4. In this case, the inductance of the second inductor L2 (e.g., "H2") may be greater than the inductance of the third inductor L3 (e.g., "H3"); the inductance of the third inductor L3 may be greater than the inductance of the first inductor L1 (e.g., "H1"); and the inductance of the first inductor L1 may be greater than the inductance of the fourth inductor L4 (e.g., "H4").

Accordingly, the power management circuit 110 may generate the channel priority table PT_CH by comparing the first to fourth swing currents ISW1 to ISW4 to. For example, the power management circuit 110 may compare the sizes of the inductances (e.g., "H1" to "H4") of the first to fourth inductors L1 to L4 based on the first to fourth swing currents ISW1 to ISW4. A specific method of how the power management circuit 110 generates the channel priority table PT_CH based on the inductances of the first to fourth inductors L1 to L4 is described with reference to FIG. 7 below.

FIG. 7 is a diagram showing a channel priority table generated according to the embodiment of FIG. 6. Referring to FIGS. 1 to 7, the channel priority table PT_CH may indicate operation ranks and channel operations of each of the plurality of channels CH. For example, the channel priority table PT_CH may indicate an operation rank and a channel operation for each of the first to fourth channels CH1 to CH4.

The power management circuit 110 may determine the operation rank for each of the first to fourth channels CH1 to CH4 according to the order of the sizes of the inductances of the first to fourth inductors L1 to L4. For example, if it is determined that the inductance of the second inductor L2 is the largest among the inductances of the first to fourth inductors L1 to L4, the power management circuit 110 may determine the operation rank of the second channel CH2 including the second inductor L2 as '1' (e.g., the highest operation rank). In this way, when the sizes of "H1" to "H4" are "H2>H3>H1>H4", the power management circuit 110 may determine the operation rank of the third channel CH3 as '2', the power management circuit 110 may determine the operation rank of the first channel CH1 as '3', and the power management circuit 110 may determine the operation rank of the fourth channel CH4 as '4' (e.g., the lowest operation rank).

The operation rank for each of the first to fourth channels CH1 to CH4 may represent the channel operation of corresponding channel CH. That is, the operation rank for each of the first to fourth channels CH1 to CH4 may indicate which channel to activate with high priority, as described above with reference to FIG. 3. For example, the operation ranks associated with the first to fourth channels CH1 to CH4 may specify the phase PH at which each channel starts to be activated. For example, the second channel CH2 having an operation rank of '1' may be activated from a first phase PH1; a third channel CH3 having an operation rank of '2' may be activated from a second phase PH2; the first channel CH1 having an operation rank of '1' may be activated from a third phase PH3; and a fourth channel CH4 having an operation rank of '4' may be activated from a fourth phase PH4.

In other words, the operation ranks for the first to fourth channels CH1 to CH4 may indicate that each of the first to fourth channels CH1 to CH4 operates as which channel. For example, the first channel CH1 activated from the first phase PH1 may operate as a master channel CH_M; a third channel CH3 activated from the second phase PH2 may operate as a first slave channel CH_S1; the first channel CH1 activated from the third phase PH3 may operate as a second slave channel CH_S2; and a fourth channel CH4 activated from the fourth phase PH4 may operate as a third slave channel CH_S3.

Therefore, according to an embodiment of the present disclosure, the master channel CH_M and the slave channels CH_S may be determined based on the inductance of the inductor L included in each channel CH. That is, a channel CH including an inductor L having a relatively large inductance will be able to operate at a relatively high operation priority. In this case, the power loss caused by the inductor L may be minimized, so the operating efficiency of the power supply circuit PSC may be improved.

FIG. 8 is a timing diagram showing the operation of a power supply circuit according to an embodiment of the present disclosure. The horizontal axis of FIG. 8 may represent time. Referring to FIGS. 1 to 8, the power supply circuit PSC may receive the input voltage Vin from a first time point t1. For example, the PMIC 100 may not receive the input voltage Vin before the first time point t1, and may receive the input voltage Vin after the first time point t1. In this case, the PMIC 100 will be able to operate (e.g., boot-up) based on the input voltage Vin.

Between a second time point t2 and a third time point t3, the power supply circuit PSC may perform a precharge operation PREC for each of the plurality of channels CH. For example, between the second time point t2 and the third time point t3, the PMIC 100 may operate in precharge mode MD_PREC.

While operating in precharge mode MD_PREC, the PMIC 100 may activate a plurality of switching signals SW by controlling the switching circuit array 120. For example, the PMIC 100 may activate the first to fourth switching signals SW1 to SW4 by controlling the first to fourth switching circuits 121 to 124. In this case, the first to fourth inductor currents IL1 to IL4 may gradually increase, and the output voltage Vout may reach the target voltage level at the third time point t3.

In an embodiment, the time period between the second time point t2 and the third time point t3 may be included in the time period during which the PMIC 100 performs a soft-start operation.

In an embodiment, the load LD may not be connected to the output node Nout during a time period between the second time point t2 and the third time point t3. However, the scope of the present disclosure is not limited thereto, and a light load may be connected to the output node Nout during the time period between the second time point t2 and the third time point t3.

Between a fourth time point t4 and a fifth time point t5, the power supply circuit PSC may perform an inductance test operation TST for each of the plurality of channels CH. For example, between the fourth time point t4 and the fifth time point t5, the PMIC 100 may operate in channel decision mode MD_CHD.

While operating in channel decision mode MD_CHD, the PMIC 100 may activate the first to fourth switching signals SW1 to SW4 by controlling the first to fourth switching circuits 121 to 124. For example, the PMIC 100 may generate first to fourth switching signals SW1 to SW4 having the same frequency and the same duty ratio, by controlling the first to fourth switching circuits 121 to 124. In this case, similarly to what was described above with reference to FIGS. 5 to 7, the PMIC 100 may compare the first to fourth inductor currents IL1 to IL4 to generate the channel priority table PT_CH (e.g., operation order) for the first to fourth channels CH1 to CH4. That is, the test period PTST may be included between the fourth time point t4 and the fifth time point t5.

In an embodiment, the first to fourth switching signals SW1 to SW4 between the fourth time point t4 and the fifth time point t5 may be PWM voltage signals. That is, between the fourth time point t4 and the fifth time point t5, the PMIC 100 may output the first to fourth switching signals SW1 to SW4 in a form of PWM voltage signals regardless of the size of the load LD. In other words, between the fourth time point t4 and the fifth time point t5, the PMIC 100 may operate in forced PWM mode.

After the sixth time point t6, the power supply circuit PSC may normally supply power to the load LD by activating one or more channels CH. That is, the power supply circuit PSC may provide current to the load LD through one or more channels CH determined based on the channel priority table PT_CH. For example, after the sixth time point t6, the PMIC 100 may operate in normal operation mode MD_NOP.

While operating in normal operation mode MD_NOP, the PMIC 100 may activate a number of channels corresponding to the size of the load current ILD based on the channel priority table PT_CH. For example, assuming that the load current ILD increases as time flows, similar to what was described above with reference to FIG. 3, the PMIC 100 may activate only the master channel CH_M during a time period between a sixth time point t6 and a seventh time point t7 when the load current ILD is between '0' and a first current value C1; and the PMIC 100 may activate the master channel CH_M and the first slave channel CH_S1 during a time period between a seventh time point t7 and an eighth time point t8 when the load current ILD is greater than the first current value C1 and less than the second current value C2. In similar way, the PMIC 100 may activate the master channel CH_M and the first to second slave channels CH_S1, CH_S2 between the eighth time point t8 and the ninth time point t9; and may activate the master channel CH_M and the first to third slave channels CH_S1 to CH_S3 after the ninth time point t9.

In an embodiment, after the sixth time point t6, the first to fourth switching signals SW1 to SW4 may be PWM voltage signals or PFM voltage signals. That is, after the sixth time point t6, the PMIC 100 may output the first to fourth switching signals SW1 to SW4 in a form of a PWM voltage signal or a PFM voltage signal depending on the size of the load LD. In other words, after the sixth time point t6, the PMIC 100 may operate in auto-PFM mode.

FIG. 9 is a flowchart showing an operation method of a PMIC according to an embodiment of the present disclosure. Referring to FIGS. 1 to 9, at operation S110, the PMIC 100 may perform a boot-up operation. For example, the PMIC 100 may initiate operation based on the input voltage Vin.

At operation S120, the PMIC 100 may precharge the first to n-th channels CH1 to CHn. For example, the PMIC 100 may enter precharge mode MD_PREC. While operating in the precharge mode MD_PREC, the PMIC 100 may charge current to each of the first to n-th inductors L1 to Ln, by providing current to each of the first to n-th channels CH1 to CHn. In this case, the voltage level of the output voltage Vout may rise to the voltage level indicated by the control signal CTRL.

At operation S130, the PMIC 100 may determine an operation order for the first to n-th channels CH1 to CHn. For example, the PMIC 100 may enter channel decision mode MD_CHD. While operating in channel decision mode MD_CHD, PMIC 100 may generate the channel priority table PT_CH for the first to n-th channels CH1 to CHn. More specifically, the PMIC 100 may determine an operation rank for each of the first to n-th channels CH1 to CHn.

At operation S140, the PMIC 100 may supply power to the load LD based on the operation order. For example, the PMIC 100 may enter normal operating mode MD_NOP. While operating in normal operation mode MD_NOP, the PMIC 100 may activate one or more channels CH determined based on the channel priority table PT_CH depending on the size of the load current ILD.

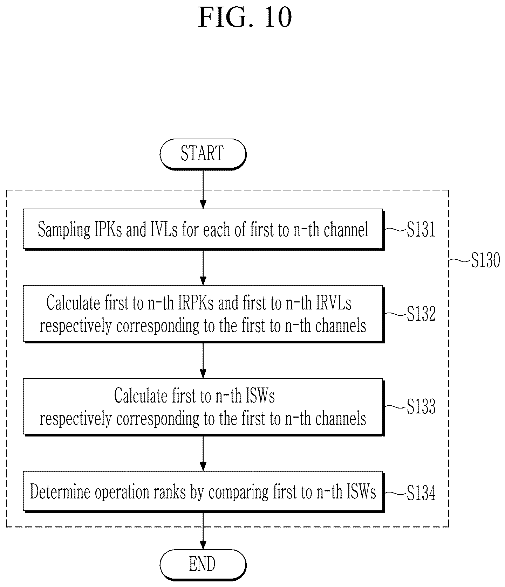

FIG. 10 is a flowchart showing operation S130 of FIG. 9 in more detail. Referring to FIGS. 1 to 10, operation S130 may include operations S131 to S134 below.

At operation S131, the PMIC 100 may sample peak currents IPK and valley currents IVL for each of the first to n-th channels CH1 to CHn. For example, during the test period PTST, the PMIC 100 may sample peak currents IPK and valley currents IVL for each of the first to n-th channels CH1 to CHn.

In an embodiment, the length of the test period PTST may be ten times of period of each of the switching signals SW during the test period PTST. In this case, during the test period PTST, the PMIC 100 may be able to sample ten peak currents IPK and ten valley currents IVL for each of the multiple channels CH. However, the scope of the present disclosure is not limited thereto.

At operation S132, the PMIC 100 may calculate first to n-th representative peak currents IRPK1 to IRPKn and first to n-th representative valley currents IRVL1 to IRVLn corresponding to the first to n-th channels CH1 to CHn, respectively. For example, the PMIC 100 may generate a first representative peak current IRPK1 based on the peak currents IPK for the first channel CH1, and may calculate a first representative valley current IRVL1 based on the valley currents IVL for the first channel CH1.

At operation S133, the PMIC 100 may calculate the first to n-th swing currents ISW1 to ISWn corresponding to the first to n-th channels CH1 to CHn, respectively. For example, the PMIC 100 may calculate the first to n-th swing currents ISW1 to ISWn based on the difference between the first to n-th representative peak currents IRPK1 to IRPKn and the first to n-th representative valley currents IRVL1 to IRVLn, respectively.

At operation S134, the PMIC 100 may determine an operation rank for each of the first to n-th channels CH1 to CHn by comparing the first to n-th swing currents ISW1 to ISWn to. For example, the PMIC 100 may compare the sizes of each of the first to n-th inductors L1 to Ln based on the first to n-th swing currents ISW1 to ISWn. The PMIC 100 may determine an operation rank for each of the first to n-th channels CH1 to CHn based on the size of each of the first to n-th inductors L1 to Ln. That is, the PMIC 100 may generate the channel priority table PT_CH based on the first to n-th swing currents ISW1 to ISWn.

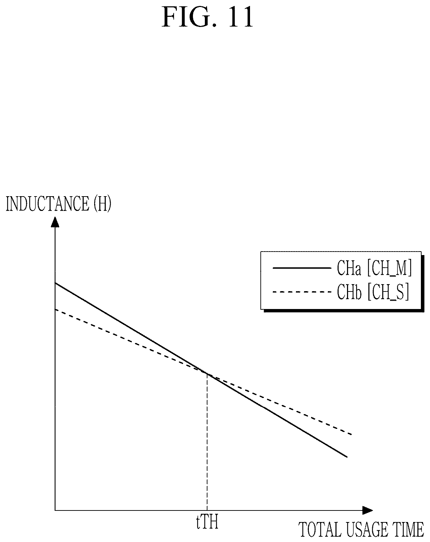

FIG. 11 is a graph showing wear of the inductor of FIG. 1 when the embodiment of the present disclosure is not applied. The horizontal axis of FIG. 11 may represent a total usage time of the power supply circuit PSC, and the vertical axis may represent inductance.

Referring to FIGS. 1 to 11, when the embodiment of the present disclosure is not applied, one channel (hereinafter, it may be referred to as a first channel CHa) may be repeatedly used as a master channel CH_M, and another channel (hereinafter, it may be referred to as a second channel CHb) may be repeatedly used as a slave channel CH_S.

The activation frequency (e.g., total activation time length) of the first channel CHa may be higher than the activation frequency (e.g., total activation time length) of the second channel CHb. In this case, depending on the use of the power supply circuit PSC, the wear of the inductor included in the first channel CHa may progress with a faster speed than the wear of the inductor included in the second channel CHb. For example, depending on the use of the power supply circuit PSC, the inductance of the inductor included in the first channel CHa may decrease with faster speed than the inductance of the inductor included in the second channel CHb. Accordingly, at the threshold time point tTH, the inductance of the inductor included in the first channel CHa may become equal to the inductance of the inductor included in the second channel CHb.

However, if the first channel CHa is repeatedly used as the master channel CH_M even after the threshold time point tTH, the inductance of the inductor included in the first channel CHa may decrease too much, and thus the power efficiency of the power supply circuit PSC may decrease.

On the other hand, according to an embodiment of the present disclosure, which of the first to n-th channels CH1 to CHn is determined as the master channel CH_M may be determined based on the inductance of each of the first to n-th inductors L1 to Ln whenever the PMIC 100 is booted up. In this case, whenever the PMIC 100 boots up, the channel including inductor with the highest inductance may be determined as the master channel CH_M. Therefore, according to an embodiment of the present disclosure, a power efficiency reduction, which occurs due to that a specific channel (e.g., the first channel CHa) is repeatedly used as the master channel CH_M after the threshold time point tTH, may be minimized.

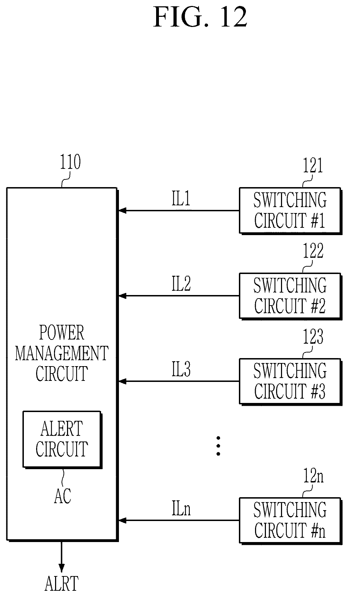

FIG. 12 is a block diagram showing the operation of the power management circuit of FIG. 1 according to an embodiment. Referring to FIGS. 1 to 12, the power management circuit 110 may monitor the first to n-th inductor currents IL1 to ILn based on the first to n-th switching circuits 121 to 12n.

The power management circuit 110 may calculate the inductance of each of the first to n-th inductors L1 to Ln based on the first to n-th inductor currents IL1 to ILn. For example, the power management circuit 110 may calculate the inductance of the first inductor L1 based on a changing rate of the first inductor current IL1; and may calculate the inductance of the second inductor L2 based on a changing rate of the second inductor current IL2. For a more detailed example, the power management circuit 110 may calculate the inductance of each of the first to n-th inductors L1 to Ln based on the swing currents ISW described above with reference to FIG. 6. However, the scope of the present disclosure is not limited to a specific algorithm by which the power management circuit 110 calculates the inductance of each of the first to n-th inductors L1 to Ln.

The power management circuit 110 may determine whether the inductance of each of the first to n-th inductors L1 to Ln is within a pre-determined 'valid inductance range'. For example, the power management circuit 110 may determine whether the inductance of each of the first to n-th inductors L1 to Ln is 30% or higher than the nominal inductance "Hnom", or 30% or lower than the nominal inductance "Hnom". However, the scope of the present disclosure is not limited to the specific manner in which the valid inductance range is defined.

The power management circuit 110 may output a lifespan warning notification ALRT when there is an inductance that is out of the 'valid inductance range' among the first to n-th inductors L1 to Ln. For example, if the inductance of the first inductor L1 is out of the valid inductance range, the power management circuit 110 may generate a lifespan warning notification ALRT for the first inductor L1. In this case, the user of the PMIC 100 may be able to replace the first inductor L1 with another inductor based on the lifespan warning notification ALRT. Therefore, according to the embodiment of the present disclosure, the maintenance and repair of the power supply circuit PSC can be simplified.

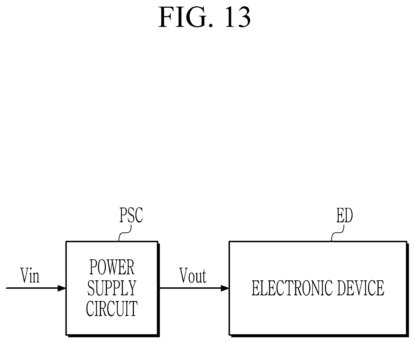

FIG. 13 is a diagram showing the operation of the power supply circuit PSC according to an embodiment. Referring to FIGS. 1 to 13, the power supply circuit PSC may receive the input voltage Vin and generate the output voltage Vout. The power supply circuit PSC may provide the output voltage Vout to an electronic device ED. That is, the electronic device ED may correspond to the load LD described above with reference to FIGS. 1 to 12.

For simplicity of explanation, in the following, it is assumed that the electronic device ED is a volatile memory device or a non-volatile memory device. However, the scope of the present disclosure is not limited thereto, and the electronic device ED may be any type of electronic device such as a processor, a sensor, and the like.

Additionally, for the sake of brevity, FIG. 13 illustrates a PMIC external circuit as a component external to the electronic device ED, but the scope of the present disclosure is not limited thereto. For example, the PMIC external circuitry may be included in the electronic device ED.

The power consumption of the electronic device ED may vary depending on the operation of the electronic device ED. For example, the power consumption of an electronic device ED when the electronic device ED performs a read or write operation may be greater than the power consumption of the electronic device ED when the electronic device ED is in an idle state.

The power supply circuit PSC according to an embodiment of the present disclosure may dynamically control a load current ILD by sequentially activating one or more channels CH according to power consumption of an electronic device ED while maintaining the output voltage Vout at a constant level. In particular, according to an embodiment of the present disclosure, a channel CH having high inductance may be activated with high priority, so that the power conversion efficiency of the power supply circuit (PSC) PSC may be improved.

## Claims

1. A power supply circuit (PSC), comprising:
first to n-th inductors (L1-L1n) connected to an output node (Nout);
first to n-th switching circuits (121-12n) configured to provide first to n-th switching signals (SW1-SWn) to the first to n-th inductors (L1-L1n), respectively; and
a power management circuit (110) configured to determine an operation order of the first to n-th switching circuits (121-12n), based on first to n-th inductor currents (IL1-ILn) corresponding to the first to n-th inductors (L1-L1n), respectively.

2. The power supply circuit (PSC) of claim 1, wherein nominal inductances of the first to n-th inductors (L1-L1n) are same as each other.

3. The power supply circuit (PSC) of claim 1 or 2, wherein the power management circuit (110) is further configured to:
generate a channel priority table (PT_CH) based on first to n-th swing currents (ISW1-ISWn) corresponding to the first to n-th inductor currents (IL1-ILn), respectively, during a first time period; and
determine the operation order based on the channel priority table (PT_CH).

4. The power supply circuit (PSC) of any one of claims 1 to 3, wherein the first switching circuit (121) comprises:
a first transistor (TRa) connected between a first node (Na) connected to a power supply voltage (VDD) and a second node (Nb) connected to the first inductor (IL1);
a second transistor (TRb) connected between the second node (Nb) and a third node connected to a ground voltage;
a first current detection circuit (121b) configured to measure a high-side current value (IHSV ) flowing from the power supply voltage (VDD) to the second node (Nb);
a second current detection circuit (121c) configured to measure a low-side current value (ILSV) flowing from the second node (Nb) to the ground voltage; and
a switching control circuit (121a) configured to calculate the first inductor current (IL1) based on the high-side current value (IHSV ) and the low-side current value (ILSV).

5. The power supply circuit (PSC) of any one of claims 1 to 4, wherein the power management circuit (110) is further configured to:
calculate a first swing current (ISW1) based on sizes of a plurality of peak currents (IPK) and a plurality of valley currents (IVL) for the first inductor current (IL1) during a first time period.

6. The power supply circuit (PSC) of any one of claims 1 to 5, wherein:
a first swing current (ISW1) corresponds to a value obtained by subtracting an average of the plurality of valley currents (IVL) from an average of the plurality of peak currents (IPK).

7. The power supply circuit (PSC) of any one of claims 1 to 6, wherein the power management circuit (110) is further configured to:
calculate first to n-th inductances corresponding to the first to n-th inductors (L1-L1n), respectively, based on the first to n-th swing currents (ISW1-ISWn); and
output a lifespan warning notification (ALRT) when one or more of the first to n-th inductances are out of a predetermined valid inductance range.

8. The power supply circuit (PSC) of any one of claims 1 to 7, wherein:
the channel priority table (PT_CH) includes first to n-th operation ranks corresponding to the first to n-th switching circuits (121-12n), respectively; and
the power management circuit (110) is further configured to determine, according to a required current for a load (LD) connected to the output node (Nout), time points at which each of the first to n-th switching signals (SW1-SWn) being activated differently, by controlling the first to n-th switching circuits (121-12n) based on the first to n-th operation ranks.

9. The power supply circuit (PSC) of any one of claims 1 to 8, wherein the power management circuit (110) is further configured to:
determine an operation rank corresponding to a switching circuit, having a smallest swing current among first to n-th swing currents (ISW1-ISWn), as a highest operation rank among the first to n-th switching circuits (121-12n).

10. The power supply circuit (PSC) of any one of claims 1 to 9, wherein:
during a first time period, each of the first to n-th switching signals (SW1-SWn) is a pulse width modulation, PWM, voltage signal having a same frequency and a same duty ratio.

11. An operation method of a power management integrated circuit, PMIC (100), providing power to a load (LD) through a plurality of channels (CH1-CHn), the operation method comprising:
booting-up (S110);
pre-charging (S120) the plurality of channels (CH1-CHn);
determining (S130) an operation order of the plurality of channels (CH1-CHn); and
supplying (S140) power to the load (LD) based on the operation order.

12. The operation method of claim 11, wherein the determining (130) of the operation order comprises:
sampling (S131) a plurality of peak currents (IPK) and a plurality of valley currents (IVL) for each of the plurality of channels (CH1-CHn);
calculating (S132) a plurality of representative peak currents (IRPK1-IRPKn) and a plurality of representative valley currents (IRPK1-IRPKn ) corresponding to the plurality of channels (CH1-CHn), respectively;
calculating (S133) a plurality of swing currents (ISW1-ISWn) corresponding to the plurality of channels (CH1-CHn), respectively, based on the plurality of representative peak currents (IRPK1-IRPKn) and the plurality of representative valley currents (IRPK1-IRPKn ); and
generating (S134) a channel priority table (PT_CH) indicating the operation order, by comparing the plurality of swing currents (ISW1-ISWn).

13. The operation method of claim 12, wherein the generating of the channel priority table (PT_CH) comprises:
determining a minimum swing current among the plurality of swing currents (ISW1-ISWn); and
determining an operation rank corresponding to a channel having the minimum swing current, as a highest operation rank among the plurality of channels (CH1-CHn).

14. The operation method of claim 12 or 13, wherein the sampling comprises:
providing to the plurality of channels (CH1-CHn), by the power management integrated circuit, pulse width modulation, PWM, voltage signals having a same frequency and a same duty ratio.

15. The operation method of any one of claims 11 to 14, wherein the supplying of the power to the load (LD) comprises:
activating, based on the operation order, different number of channels (CH1-CHn) for each of a plurality of load (LD) current ranges for a current (ILD) required from the load (LD).
